# EUROPEAN PATENT APPLICATION

(11) **EP 4 775 535 A1**
(43) Date of publication of application: **15.07.2026**
(21) Application number: 24862813.3
(22) Date of filing: 04.09.2024
(51) Int. Cl.: C01B 21/072, C08K 9/06, C08L 63/00

(54) **SURFACE-TREATED ALUMINUM NITRIDE POWDER**

(30) Priority: 06.09.2023 JP 2023144232
(71) Applicant: TOKUYAMA CORPORATION, Yamaguchi 745-8648 (JP)
(72) Inventor: INAGAWA, Hisamori, Shunan-shi, Yamaguchi 745-8648 (JP); INAKI, Yoshitaka, Shunan-shi, Yamaguchi 745-8648 (JP)
(74) Representative: Dehns
(86) International application number: PCT/JP2024/031660
(87) International publication number: WO 2025/053161

(57) **Abstract**

The present invention provides a surface-treated aluminum nitride powder which is surface-treated with a silane compound having a polymerizable unsaturated bond, and when the aluminum nitride powder is filled into an epoxy resin to form a resin composition, low viscosity and a high level of filling can be achieved, the resin composition has a long pot life, and the surface-treated aluminum nitride powder is capable of maintaining high adhesion to the resin in a cured body. The surface-treated aluminum nitride powder of the present invention is an aluminum nitride powder having a silane compound having a polymerizable unsaturated bond in a molecule present on a particle surface, in which a carbon content per 1 m² of a surface of the aluminum nitride powder is 0.4 × 10⁻³ g/m² or more and 1.6 × 10⁻³ g/m² or less, and an unsaturated bond content per 1 g of carbon present on the surface of the aluminum nitride powder, calculated from an iodine amount determined by Wijs method, is 2.5 × 10²¹ pieces/g or more and 5.5 × 10²¹ pieces/g or less.

## Description

### Technical Field

The present invention relates to a novel surface-treated aluminum nitride powder.

### Background Art

In recent years, along with high integration of semiconductor devices, miniaturization and high performance of electronic components forming a semiconductor have been advanced. The largest problem for performing a large amount of calculation at high speed is heat generation of a semiconductor, and demand for a heat dissipation material used for heat dissipation is increasing. There are various forms of heat dissipation materials used in semiconductors, such as heat dissipation sheets, semiconductor encapsulants, heat dissipation greases, heat dissipation gap fillers, and heat dissipation adhesives. Examples of these heat dissipation materials include heat dissipation resin materials obtained by combining a resin such as a silicone resin, an epoxy resin, or an acrylic resin with a filler having high thermal conductivity. As the filler, for example, aluminum nitride, boron nitride, aluminum oxide (alumina), or zinc oxide is used. Among them, aluminum nitride having particularly high thermal conductivity has a thermal conductivity five times or more that of alumina, and is expected as a filler for a heat dissipation material.

Generally, when a resin is highly filled with a thermally conductive filler, the thermal conductivity of the heat dissipation resin material can be increased. In order to improve the filling property, there is a method of increasing the affinity of the filler with the resin or removing the aggregated powder. In addition, in order to increase the affinity with the resin, an additive may be added or the filler may be surface-treated. An epoxy resin is often used as the heat dissipation resin material, and a silane compound having an epoxy group is often used for the surface treatment.

However, when a filler surface-treated with a silane compound having an epoxy group is used, the epoxy group of the surface treatment agent reacts with a curing agent component depending on the type of the curing agent of the epoxy resin, and the filling property and the operability may be deteriorated.

On the other hand, as a surface treatment agent for the filler to be filled into the epoxy resin, a silane compound having a polymerizable unsaturated bond without having an epoxy group capable of enhancing the affinity between the filler and the resin is known (see Patent Literature 1). Examples of the silane compound having a polymerizable unsaturated bond include (meth)acrylic silane. When an aluminum nitride powder having high thermal conductivity is treated with the silane compound, it is considered that adhesion to the resin is good, thermal conductivity is high, and moreover, the effect of reducing elasticity described in the above-mentioned literature can be expected, and further, since the silane compound does not have an epoxy group, deterioration of the filling property and the operability due to the epoxy group of the surface treatment agent does not occur.

### Citation List

### Patent Literature

Patent Literature 1: WO 2015/104917 A

### Summary of Invention

### Technical Problem

However, it has been found that when the aluminum nitride powder is actually surface-treated by a conventional method using a silane compound having a polymerizable unsaturated bond and filled into an epoxy resin, the viscosity of the resin after filling is significantly increased. Patent Literature 1 does not describe the occurrence of such a phenomenon and a method for solving the phenomenon at all, and it can be said that this is a problem to be quickly solved.

Therefore, an object of the present invention is to provide an aluminum nitride powder which is surface-treated with a silane compound having a polymerizable unsaturated bond, and when the aluminum nitride powder is filled into an epoxy resin to form a resin composition, the aluminum nitride powder can be highly filled, the resin composition has a low viscosity and a long pot life, and the surface-treated aluminum nitride powder is capable of maintaining high adhesion to the resin in a cured body obtained by curing the resin composition.

### Solution to Problem

The present inventors have intensively studied to achieve the above object, and as a result, have found that the degree of viscosity increase when the aluminum nitride powder is filled into an epoxy resin varies depending on the treatment conditions for the surface treatment of the aluminum nitride powder using the silane compound having a polymerizable unsaturated bond. As a result of further studies based on the above findings, it has been found that the increase in viscosity is more significant as the unsaturated bond of the silane compound having a polymerizable unsaturated bond is greatly reduced by the operation of surface treatment. It has then been confirmed that when a surface-treated aluminum nitride powder in which the reduction amount of unsaturated bonds is suppressed within a specific range is used, an increase in viscosity when the surface-treated aluminum nitride powder is filled into a resin is small, and an effect of improving adhesion between the surface-treated aluminum nitride powder and the resin, which is an original function of the silane compound, can be sufficiently exhibited, and the present invention has been completed.

That is, according to the present invention, there is provided a surface-treated aluminum nitride powder having a silane compound having a polymerizable unsaturated bond in a molecule present on a particle surface, wherein a carbon content per 1 m² of a surface of the aluminum nitride powder is 0.4 × 10⁻³ g/m² or more and 1.6 × 10⁻³ g/m² or less, and an unsaturated bond content per 1 g of carbon present on the surface of the aluminum nitride powder, calculated from an iodine amount determined by Wijs method, is 2.5 × 10²¹ pieces/g or more and 5.5 × 10²¹ pieces/g or less.

The silane compound is preferably a (meth)acrylic silane compound having a polymerizable unsaturated bond in a molecule.

In the surface-treated aluminum nitride powder of the present invention, the density of the silane compound is particularly preferably 0.4 to 5.0 pieces/nm² in order to maintain appropriate affinity with the epoxy resin.

In addition, the surface-treated aluminum nitride powder of the present invention having a 50% cumulative volume particle diameter D50 of 0.3 µm to 40 µm is particularly preferably used.

According to the present invention, there is further provided a method for producing a surface-treated aluminum nitride powder, the method including a step of contacting an aluminum nitride powder with a silane compound having a polymerizable unsaturated bond in a molecule, then retaining them at a temperature of less than 60°C for 30 minutes or more, and then heating them at a temperature of 60 to 80°C under a reduced pressure condition.

According to the present invention, a filler formed of the surface-treated aluminum nitride powder is also provided, and a resin composition containing an epoxy resin and the filler, and further a cured body of the resin composition are also provided. Here, the resin composition preferably contains the filler in an amount of 5% by mass or more in the resin composition.

### Advantageous Effects of Invention

The surface-treated aluminum nitride powder of the present invention is an aluminum nitride powder having a silane compound having a polymerizable unsaturated bond in a molecule present on a particle surface, and when the surface-treated aluminum nitride powder is filled into a resin such as an epoxy resin to form a resin composition, a high level of filling can be achieved, and the resin composition can have a low viscosity and a long pot life. In the cured body obtained by curing the resin composition, adhesion between the aluminum nitride powder and the resin is maintained high. Furthermore, due to the high adhesion, it can also be expected that the entry of water into the cured body is highly suppressed and high water resistance is exhibited.

### Description of Embodiments

### [Surface-treated aluminum nitride powder]

The surface-treated aluminum nitride powder of the present invention is characterized by having a silane compound having a polymerizable unsaturated bond immobilized on a particle surface. The silane compound may be any silane compound having a polymerizable unsaturated bond, and may be, for example, an alkoxysilane to which a group having a polymerizable unsaturated bond, such as a (meth)acrylic group shown in a representative example described later, is bonded. At this time, the main chain to which Si and the group having a polymerizable unsaturated bond are bonded is preferably a linear hydrocarbon group, and the number of carbon atoms thereof (not including carbon forming an unsaturated bond) is preferably 0 to 12. The number of carbon atoms is preferably 3 or more and preferably 8 or less. When the number of carbon atoms is more than 12, it becomes difficult to satisfy the conditions of the carbon content per 1 m² of the surface of the aluminum nitride powder and the unsaturated bond content per 1 g of carbon present on the surface of the aluminum nitride powder, which are specified in the surface-treated aluminum nitride powder, and in addition, the affinity with the epoxy resin tends to be lowered, and the filling property into the resin and the operability are deteriorated.

Representative compounds preferably used as the silane compound having a polymerizable unsaturated bond include, for example, 3-methacryloxypropyltrimethoxysilane, 3-methacryloxypropyltriethoxysilane, 3-methacryloxypropylmethyldimethoxysilane, 3-methacryloxypropylmethyldiethoxysilane, 3-acryloxypropyltrimethoxysilane, 3-acryloxypropyltriethoxysilane, 8-methacryloxyoctyltrimethoxysilane, 8-methacryloxyoctyltriethoxysilane, 8-methacryloxyoctylmethyldimethoxysilane, 8-methacryloxyoctylmethyldiethoxysilane, 8-acryloxyoctyltrimethoxysilane, 8-acryloxyoctyltriethoxysilane, 10-methacryloxydecyltrimethoxysilane, 10-methacryloxydecyltriethoxysilane, 10-methacryloxydecylmethyldimethoxysilane, 10-methacryloxydecylmethyldiethoxysilane, 10-acryloxydecyltrimethoxysilane, 10-acryloxydecyltriethoxysilane, 12-methacryloxydodecyltrimethoxysilane, 12-methacryloxydodecyltriethoxysilane, 12-methacryloxydodecylmethyldimethoxysilane, 12-methacryloxydodecylmethyldiethoxysilane, 12-acryloxydodecyltrimethoxysilane, 12-acryloxydodecyltriethoxysilane, vinyltrimethoxysilane, vinyltriethoxysilane, vinyltrichlorosilane, allyltrimethoxysilane, allyltriethoxysilane, and p-styryltrimethoxysilane. Among them, more preferable silane compounds include 3-methacryloxypropyltrimethoxysilane, 3-methacryloxypropyltriethoxysilane, vinyltrimethoxysilane, and vinyltriethoxysilane.

The surface-treated aluminum nitride powder may be surface-treated with only one silane compound, or surface-treated with a combination of two or more silane compounds.

In the surface-treated aluminum nitride powder, the carbon content (weight) per 1 m² of the surface of the aluminum nitride powder is 0.4 × 10⁻³ g/m² or more and 1.6 × 10⁻³ g/m² or less. The carbon content is preferably 0.5 × 10⁻³ g/m² or more and preferably 1.5 × 10⁻³ g/m² or less. It is important that the carbon content is in the above range in order to exhibit the filling property into the epoxy resin and the operability. That is, when the carbon content is less than 0.4 × 10⁻³ g/m², generally, the amount of the silane compound present on the surface tends to be small, and therefore, the effect by the surface treatment of the aluminum nitride powder, such as improvement in filling property into the epoxy resin and operability at the time of filling, cannot be expected. In addition, when the carbon content is more than 1.6 × 10⁻³ g/m², generally, there tends to be a large amount of silane compounds present on the surface, and therefore the silane compounds present in excess tend to form oligomers and are likely to be immobilized on the surface, and the oligomers immobilized on the surface inhibit the effect of the surface treatment of the aluminum nitride powder, deteriorate the viscosity during kneading with the epoxy resin, and also become thermal resistance between the aluminum nitride particles, making it difficult to exhibit high thermal conductivity inherent in the aluminum nitride powder.

The carbon content per 1 m² of the surface of the surface-treated aluminum nitride powder is determined by the method described in Examples.

In the surface-treated aluminum nitride powder of the present invention, it is important that the number of polymerizable unsaturated bonds (unsaturated bond content) calculated from the iodine amount determined by the Wijs method, per 1 g of carbon present on the surface of the aluminum nitride powder is 2.5 × 10²¹ pieces/g or more and 5.5 × 10²¹ pieces/g or less, in addition to the requirement of the carbon content. The unsaturated bond content per 1 g of carbon present on the surface of the surface-treated aluminum nitride powder is determined by the method described in Examples.

The Wijs method is a method described in Examples described later.

When the number of the polymerizable unsaturated bonds is less than 2.5 × 10²¹ pieces/g, the treatment amount with the silane compound, that is, the amount of the polymerizable unsaturated bond with respect to the carbon content is small. The small amount of the polymerizable unsaturated bond with respect to the carbon content is considered to be a result of consumption of the initially present polymerizable unsaturated bond by polymerization of silane compounds. Therefore, the aggregation of the plurality of aluminum nitride particles occurs with the polymerization of the silane compounds, and thus there is a possibility that the filling property into the epoxy resin and the operability are impaired.

The surface-treated aluminum nitride powder treated with a silane compound having a large number of carbon atoms in the main chain may satisfy the carbon content, but the ratio of the amount of the polymerizable unsaturated bonds to the carbon content tends to be small, and tends not to satisfy the above range. Also in this case, there arises a problem that the effect due to the presence of the polymerizable unsaturated bond is small.

Although the density of the silane compound in the surface-treated aluminum nitride powder cannot be directly measured, the density of the silane compound calculated from the carbon content and the information on the silane compound used is preferably 0.4 to 5.0 pieces/nm². The density of the silane compound is preferably 0.8 pieces/nm² or more and preferably 4.0 pieces/nm² or less. The information on the silane compound refers to the number of carbon atoms contained in one molecule of the silane compound, and particularly when the silane compound is an alkoxysilane having two or more alkoxy groups, the information on the silane compound refers to the number of carbon atoms contained in one molecule of the silane compound after two alkoxy groups are eliminated. The density of the silane compound is determined by the method described in Examples.

The other physical properties of the surface-treated aluminum nitride powder are not particularly limited, but from the viewpoint of use as a filler, the 50% cumulative volume particle diameter (D50) determined from the particle size distribution measured using an ethanol solvent in a laser diffraction scattering type particle size distribution meter is preferably 0.3 µm to 40 µm. The D50 is preferably 0.7 µm or more and preferably 27 µm or less. That is, the aluminum nitride powder having the particle diameter is particles having a relatively large specific surface area as a filler, and has a large area for forming an interface with the resin, so that the effect of the present invention is particularly remarkable. Specifically, the specific surface area is preferably in the range of 0.1 to 6.0 m²/g. The specific surface area refers to a BET specific surface area measured by a nitrogen adsorption one-point method.

The 90% cumulative volume particle diameter (D90) of the surface-treated aluminum nitride powder determined from the particle size distribution is preferably 100 µm or less.

The surface-treated aluminum nitride powder can be used, for example, as a filler.

The method for producing the surface-treated aluminum nitride powder of the present invention is not particularly limited, but a production method including a step of contacting an aluminum nitride powder having an oxide layer formed on a particle surface at about 0.005% to 0.2% of the particle diameter with a surface treatment agent formed of a silane compound having a polymerizable unsaturated bond in a dry manner at a temperature of lower than 60°C, and then a step of heating them at a temperature of 60 to 80°C under a reduced pressure condition is preferably employed. Hereinafter, the production method will be described in detail.

### [Raw material aluminum nitride powder]

As the aluminum nitride powder used as a raw material for surface treatment, a powdery aluminum nitride powder produced by a conventionally known method can be used without particular limitation. In the present invention, the aluminum nitride powder before being subjected to the surface treatment is referred to as "raw material aluminum nitride powder". Examples of the method for producing the raw material aluminum nitride powder include a direct nitridation method, a reduction nitridation method, and a gas-phase synthesis method.

The shape of the primary particles of the raw material aluminum nitride powder is not particularly limited, and may be any shape such as irregular, spherical, polyhedral, columnar, whisker, or plate-like shape. Among them, in filler applications, a spherical shape having good viscosity characteristics and high reproducibility of thermal conductivity is desirable. In addition, the aspect ratio of the aluminum nitride particles is preferably small. A preferable aspect ratio is 1 to 3.

The particle size distribution of the raw material aluminum nitride powder is not particularly limited, and may be appropriately determined in consideration of a change in the particle diameter due to the surface treatment of a targeted surface-treated aluminum nitride powder. For example, the 50% cumulative volume particle diameter D50 determined from a particle size distribution measured using a water solvent in a laser diffraction scattering type particle size distribution meter is preferably 0.3 to 40 µm. The D50 is preferably 0.7 µm or more and preferably 27 µm or less.

The specific surface area of the raw material aluminum nitride powder measured by the BET method is preferably 0.1 to 6.0 m²/g. The specific surface area is preferably 0.6 m²/g or more and preferably 5.5 m²/g or less.

The raw material aluminum nitride powder may contain impurities such as an alkaline earth element and a rare earth element derived from a raw material or intentionally added in a synthesis method in an amount of about 5 parts by mass with respect to 100 parts by mass of the raw material aluminum nitride powder as an upper limit. The raw material aluminum nitride powder may contain up to approximately 5 parts by mass of boron nitride as impurities derived from an aggregation inhibitor or a production process. However, the amount of impurities that significantly lowers the crystallinity of aluminum nitride causes a decrease in the thermal conductivity, which is not preferable. The content of the aluminum nitride in the raw material aluminum nitride powder is preferably 90% by mass or more, more preferably 95% by mass or more, and further preferably 99% by mass or more.

The raw material aluminum nitride powder preferably has an oxide layer on the surface of aluminum nitride particles. The thickness of the oxide layer is preferably 0.005% to 0.2% of the particle diameter. The thickness of the oxide layer is preferably about 0.05% or more of the particle diameter, and preferably about 1.5% or less of the particle diameter. This makes it possible to allow a silane compound as a surface treatment agent to be present on the surface of the aluminum nitride particles in a range that satisfies the carbon content described above. The thickness of the oxide layer can be confirmed even after the surface treatment, and the thickness hardly changes from that before the treatment. When the thickness of the oxide layer is less than 0.005% of the particle diameter, the bonding amount of the silane compound as the surface treatment agent tends to be insufficient. When the thickness of the oxide layer exceeds 0.2% of the particle diameter, there is a concern that the thermal conductivity between the aluminum nitride particles is inhibited.

The oxide layer may be formed by natural oxidation when the raw material aluminum nitride powder is stored, or may be formed by an intentionally performed oxidation treatment step. The oxidation treatment of the aluminum nitride powder may be performed in the process of producing the raw material aluminum nitride powder, or may be performed as a separate step after producing the raw material aluminum nitride powder. For example, since a raw material aluminum nitride powder obtained by a reduction nitridation method undergoes an oxidation treatment step in a production process for the purpose of removing carbon used at the time of reaction, an aluminum oxide layer is present on the surface. The aluminum nitride powder obtained by the reduction nitridation method may be further subjected to an oxidation treatment step.

When the oxidation treatment step is additionally performed as a separate step, preferable conditions thereof are as follows. The raw material aluminum nitride powder obtained by various methods is heated in an atmosphere containing oxygen at a temperature of preferably 400 to 1,000°C, more preferably 600 to 900°C, for preferably 10 to 600 minutes, more preferably 30 to 300 minutes, whereby an aluminum oxide layer can be formed on the surfaces of the raw material aluminum nitride particles. As the atmosphere containing oxygen, for example, oxygen, air, water vapor, or carbon dioxide can be used, but in the relationship with the object of the present invention, treatment in air, particularly under atmospheric pressure, is preferable.

### [Surface treatment of raw material aluminum nitride powder]

In the method for producing the surface-treated aluminum nitride powder, the surface treatment is performed, for example, by a method including a step of contacting the raw material aluminum nitride powder on which the oxide layer is formed with a surface treatment agent formed of a silane compound having a polymerizable unsaturated bond in a dry manner at a temperature of lower than 60°C, and then a step of heating them at a temperature of 60 to 80°C under a reduced pressure condition.

In the reaction between the raw material aluminum nitride powder and the silane compound as a surface treatment agent, all the reactive groups of the silane compound such as alkoxy groups do not need to react with aluminum nitride, and some of the reactive groups may be free. However, when the free silane compound is excessive, the silane compound may become thermal resistance, and thermal conductivity may be deteriorated.

Therefore, the amount of the silane compound is preferably adjusted according to the amount of hydroxyl groups on the surface of the aluminum nitride to be reacted. Specifically, a method of limiting the amount of the silane compound used is preferable as the adjustment means. The amount of the silane compound used is preferably 0.1 to 5 parts by mass, more preferably 0.2 to 1.0 parts by mass, based on 100 parts by mass of the raw material aluminum nitride powder. In addition, after the surface treatment, a step of removing the free treatment agent using pressure reduction and heat treatment may be performed.

In the production method, examples of method of contacting the aluminum nitride powder with the silane compound as a surface treatment agent include a dry surface treatment method and a wet surface treatment method. The dry surface treatment is a method in which a solvent is not used when the aluminum nitride powder and the surface treatment agent are mixed. The wet surface treatment is a method in which a solvent is used, and a step of drying the solvent is required. In the step of heating under reduced pressure after the contact step, it is important that no solvent remains, but since heating is required as a method for removing a solvent, there is a high risk that polymerization of an unsaturated bond occurs. Therefore, the dry surface treatment method is more desirable in that polymerization of an unsaturated bond is less likely to occur.

Examples of the dry mixing method in the dry surface treatment include a method in which the surface treatment agent is gasified and mixed with the powder, a method in which a liquid surface treatment agent is input by spraying or dropping and mixed with the powder, and a method in which the surface treatment agent is diluted with a small amount of organic solvent to increase the amount of liquid, and further sprayed or dropped. The dry mixing method for gasifying the surface treatment agent can be applied when the surface treatment is performed with a surface treatment agent formed of a low-molecular-weight silane compound having high volatility. The dry mixing method of diluting the surface treatment agent with an organic solvent is preferable for uniformly dispersing the surface treatment agent in the entire powder when the amount of the surface treatment agent is small. In this case, if the amount of the organic solvent used for dilution is large, the liquid content of the entire powder increases and causes aggregation. Therefore, it is desirable to determine the upper limit of the amount of the organic solvent used when diluting the surface treatment agent is about 50 times by weight.

As the dry mixing device, a general mixing and stirring device can be used, and examples thereof include a planetary mixing device, a Henschel mixer, a super mixer, a V-type mixer, a drum mixer, a double cone mixer, and a rocking mixer. It is desirable that the dry mixing device be equipped with a heating function. In addition, since the powder is easily aggregated in the dry mixing, it is desirable that the mixing device be provided with a mechanism for releasing the aggregation once generated, such as a crushing blade or a chopper. During the mixing operation, not only the powder is simply adhered, but also the powder is pressed against the wall of the mixing container depending on the stirring mechanism, so that a thick adhesion layer may be formed, and in this case, the mixed state of the powder cannot be maintained. Therefore, it is more preferable that the wall surface of the mixing container is provided with, for example, an attachment prevention measure such as a fluororesin coat, an attached powder removal mechanism such as a knocker, or a scrape-off mechanism in which a stirring blade is modified.

In the method for producing the surface-treated aluminum nitride powder, the step of heating under a reduced pressure condition after contact in a dry manner at a temperature of lower than 60°C is a step of performing heating at about 60 to 80°C for about 2 to 24 hours under a reduced pressure condition. One of the purposes of this operation is to immobilize the silane compound as a surface treatment agent on the surface of the aluminum nitride, but an operation of adjusting the amount of the silane compound in the aluminum nitride powder after the contact can also be performed as necessary.

In the heating step, it is possible to remove the excessive surface treatment agent by heating under reduced pressure, thereby preventing the free surface treatment agent that is not immobilized to the aluminum nitride powder from being excessively present, and the aluminum nitride powder from being aggregated by a series of surface treatment operations. The pressure at the time of pressure reduction is desirably 10 hPa or less.

The ratio of the aluminum nitride forming the surface-treated aluminum nitride powder to the silane compound as the surface treatment agent is not limited, and the optimum amount varies depending on the particle diameter and specific surface area of the powder. The amount of the silane compound used is preferably 10 parts by mass or less, more preferably 6 parts by mass or less, and preferably 0.1 parts by mass or more, more preferably 0.2 parts by mass or more, based on 100 parts by mass of the raw material aluminum nitride powder. When the amount of the silane compound used is the above upper limit value or less, aggregation of the surface-treated aluminum nitride powder is prevented, the particle size distribution of the raw material powder can be maintained, and the good filling property into the resin can be exhibited. On the other hand, when the amount of the silane compound used is excessive, many aggregated particles are generated, and the filling ratio cannot be increased, so that it is difficult to increase the thermal conductivity of the resin material.

### [Treatment after Surface Treatment]

The surface-treated aluminum nitride powder obtained by the surface treatment may be agglomerated, and the powder characteristics and the filling property into the resin may be impaired. In this case, it is preferable to remove the coarse particles by a crushing treatment or a classification treatment.

The treatment is preferably performed so that the 90% cumulative volume particle diameter D90 of the obtained surface-treated aluminum nitride powder is 100 µm or less.

As the crushing method, dry crushing is preferable. In addition, a relatively mild method is desirable so that the majority of the formed aggregates are not crushed. In particular, when strong crushing to the extent of crushing the primary particles is performed, the effect of the present invention is lost. Examples of the crusher include a dry crusher such as a stone mill-type grinder, a pulverizer, a cutter mill, a hammer mill, and a pin mill. Among them, a stone mill-type grinder that can selectively crush large aggregates in a short time and has little crushing unevenness is preferable. The atmosphere of the crushing treatment is desirably air or an inert gas. In addition, the humidity of the atmosphere is preferably not too high, and specifically, is preferably less than 70%, and more preferably less than 55%.

In addition, classification treatment may be performed as a method for removing coarse aggregated particles other than the crushing treatment. As the classification treatment, either a dry classification method or a wet classification method can be selected, but when classification with high accuracy is not required, a dry classification method capable of omitting an operation of removing a solvent is desirable. As the dry classification method, an air flow classification and a vibration sieve can be used.

The method and apparatus of air flow classification may be appropriately selected so as to have a preferable particle size distribution as a filler for a resin composition. The air flow classification method is a method in which powder is dispersed in an air flow, and fine powder and coarse powder are separated by, for example, gravity, inertial force, or centrifugal force of particles at that time. In particular, accuracy suitable for classification of particles of several µm can be obtained by a classifier using inertial force and centrifugal force.

Examples of the method of utilizing the inertial force include an impactor type in which a guide blade, for example, is provided inside the apparatus to form a swirl flow of air to separate the fine powder and the coarse powder when the granular material urged by the airflow is bent into a curve, a semi-free vortex centrifugal type in which centrifugal force is applied to the particles to classify the particles, and a Coanda type utilizing the Coanda effect. Examples of the classifier utilizing the inertial force include a cascade impactor, a viable impactor, an aerofine classifier, an eddy classifier, an elbow-Jet, and a hyperplex.

The method of utilizing the centrifugal force is a method of separating the fine powder and the coarse powder using vortex airflows, and examples of the device include a free vortex type and a forced vortex type. Examples of the free vortex type device include a cyclone without a guide blade, a multistage cyclone, a turboplex that uses secondary air to promote elimination of agglomeration, a dispersion separator provided with a guide blade to improve classification accuracy, a microspin, and a microcut. The forced vortex type is a device in which a centrifugal force is applied to particles by a rotating body inside the device and another air flow is generated inside the device to improve classification accuracy, and examples thereof include Turbo Classifier and Donaselec.

The crushing treatment and the classification treatment may be used in combination.

### [Resin composition]

The resin composition of the present invention contains an epoxy resin and a filler formed of the surface-treated aluminum nitride powder. The filler formed of the surface-treated aluminum nitride powder is excellent in the filling property into an epoxy resin and the operability, and has a small increase in viscosity even when kneaded under heating, and thus has a long pot life when forming a resin composition.

The epoxy resin is not particularly limited, and a general epoxy resin can be used. Examples of the epoxy resin include a polyfunctional epoxy resin such as a bisphenol A epoxy resin, a bisphenol F epoxy resin, a phenol novolac epoxy resin, a cresol novolac epoxy resin, an alicyclic epoxy resin, a heterocyclic epoxy resin, a glycidyl ester epoxy resin, a glycidyl amine epoxy resin, a biphenyl epoxy resin, a naphthalene ring-containing epoxy resin, and a cyclopentadiene-containing epoxy resin. Among them, the bisphenol A epoxy resin, the bisphenol F epoxy resin, and the biphenyl epoxy resin are preferable.

As a curing agent for curing the epoxy resin, a general curing agent for the epoxy resin can be used. Examples of the curing agent include a thermosetting curing agent and a photocuring agent. Examples of the thermosetting curing agent include an amine, a polyamide, an imidazole, an acid anhydride, a boron trifluoride-amine complex, dicyandiamide, an organic acid hydrazide, a phenol novolac resin, a bisphenol novolac resin, and a cresol novolac resin. Examples of the photocuring agent include diphenyliodonium hexafluorophosphate and triphenylsulfonium hexafluorophosphate. Among them, an amine, an imidazole, and an acid anhydride are preferable.

Examples of the amine curing agent include chain aliphatic amines such as diethylenetriamine, triethylenetetramine, tetraethylenepentamine, dipropylenediamine, and diethylaminopropylamine; cyclic aliphatic polyamines such as N-aminoethylpiperazine and isophoronediamine; aliphatic aromatic amines such as m-xylenediamine; and aromatic amines such as meta-phenylenediamine, diaminodiphenylmethane, and diaminodiphenylsulfone.

Examples of the imidazole curing agent include 2-methylimidazole, 2-ethyl-4-methylimidazole, 1-cyanoethyl-2-undecylimidazole trimellitate, and an epoxy imidazole adduct.

Examples of the acid anhydride curing agent include phthalic anhydride, trimellitic anhydride, pyromellitic anhydride, benzophenone tetracarboxylic anhydride, ethylene glycol bistrimelitate, maleic anhydride, tetrahydrophthalic anhydride, methyltetrahydrophthalic anhydride, methylendomethylene tetrahydrophthalic anhydride, methylbutenyl tetrahydrophthalic anhydride, dodecenyl succinic anhydride, hexahydrophthalic anhydride, succinic anhydride, methylcyclohexene dicarboxylic anhydride, an alkylstyrene-maleic anhydride copolymer, chlorendic anhydride, and polyazelaic anhydride.

In addition to the epoxy resin and the curing agent, a curing accelerator may be blended as necessary to promote curing. Examples of the curing accelerator include imidazole-based curing accelerators such as imidazole and 2-methylimidazole; phosphine derivatives such as triphenylphosphine, tris-p-methoxyphenylphosphine, and tricyclohexylphosphine; and cycloamidine derivatives such as 1,8-diazabicyclo[5.4.0]undec-7-ene.

Furthermore, a reactive diluent having an epoxy group may be further blended with the mixture of the epoxy resin, the curing agent, and the curing accelerator. Commonly used reactive diluents may be used as the reactive diluent. Examples of the reactive diluent that can be used include n-butyl glycidyl ether, allyl glycidyl ether, styrene oxide, phenyl glycidyl ether, glycidyl methacrylate, p-sec-butyl phenyl glycidyl ether, diglycidyl ether, (poly)ethylene glycol diglycidyl ether, (poly)propylene glycol diglycidyl ether, butanediol diglycidyl ether, diglycidyl aniline, and glycerin triglycidyl ether.

In the resin composition, the filler formed of the surface-treated aluminum nitride powder can be used in the amount of 25 to 1600 parts by mass, preferably 25 to 1500 parts by mass per 100 parts by mass of the resin. In particular, when the surface-treated aluminum nitride powder having a particle size distribution in which the D50 is 0.5 to 40 µm is used, it is preferable to set the amount of the surface-treated aluminum nitride powder to 25 to 640 parts by mass, and to form the resin composition by combining an other filler other than the surface-treated aluminum nitride powder within the aforementioned blending range.

The other filler may not necessarily be a thermally conductive filler, but a filler that promotes hydrolysis of aluminum nitride or that reacts with aluminum nitride to produce a different compound should be avoided. An organic solvent may be used as long as the organic solvent is removed in the process of forming the final resin molded body.

The content of the filler formed of the surface-treated aluminum nitride powder in the resin composition is preferably 5% by mass or more, more preferably 13% by mass or more, and further preferably 20% by mass or more, for example, 93% by mass or less, based on 100% by mass of the resin composition.

Examples of the other filler include alumina, boron nitride, ZnO, MgO, carbon fiber, and diamond particles. Further examples include composite oxides such as silica, quartz, talc, mica, silica-titania, silica-zirconia, silica-barium oxide, silica-aluminumna, silica-calcia, silica-strontium oxide, and silica-magnesia, and silicates such as zeolite and montmorillonite.

The resin composition may contain a known additive in addition to the filler. Examples of the additive include epoxy group-containing silanes such as 3-glycidoxypropyltrimethoxysilane, 3-glycidoxypropyltriethoxysilane, 3-glycidoxypropylmethyldimethoxysilane, 3-glycidoxypropylmethyldiethoxysilane, and 2-(3,4-epoxycyclohexyl)ethyltrimethoxysilane;
methacrylic group-containing silanes such as 3-methacryloxypropyltrimethoxysilane, 3-acryloxypropyltrimethoxysilane, 3-methacryloxypropyltriethoxysilane, 3-methacryloxypropylmethyldimethoxysilane, 3-methacryloxypropylmethyldiethoxysilane, 3-acryloxypropyltrimethoxysilane, 8-methacryloxyoctyltrimethoxysilane, 8-methacryloxyoctyltriethoxysilane, 8-methacryloxyoctylmethyldimethoxysilane, 8-methacryloxyoctylmethyldiethoxysilane, and 8-acryloxyoctyltrimethoxysilane;
amino group-containing silanes such as 3-aminopropyltrimethoxysilane, 3-aminopropyltriethoxysilane, 2-aminoethyl-3-aminopropyltrimethoxysilane, 3-triethoxysilyl-N-(1,3-dimethyl-butylidene)propylamine, 2-aminoethyl-3-aminopropylmethyldimethoxysilane, 3-dimethylaminopropyltrimethoxysilane, 3-diethylaminopropyltrimethoxysilane, and N-phenyl-3-aminopropyltrimethoxysilane;
alkylsilanes such as methyltrimethoxysilane, dimethyldimethoxysilane, dimethyldiethoxysilane, trimethylmethoxysilane, ethyltrimethoxysilane, n-propyltrimethoxysilane, isobutyltrimethoxysilane, isobutyltriethoxysilane, n-hexyltrimethoxysilane, n-hexyltriethoxysilane, cyclohexyltrimethoxysilane, cyclohexylmethyldimethoxysilane, n-octyltriethoxysilane, n-decyltriethoxysilane, n-hexadecyltriethoxysilane, and n-octadecyltriethoxysilane;
fluorinated alkylsilanes such as trifluoropropyltrimethoxysilane and trifluoropropylmethyldimethoxysilane;
aromatic group-containing silanes such as phenyltrimethoxysilane, phenyltriethoxysilane, diphenyldimethoxysilane, and diphenyldiethoxysilane;
mercapto group-containing silanes such as 3-mercaptopropyltrimethoxysilane and 3-mercaptopropylmethyldimethoxysilane;
vinyl-containing silanes such as vinyltrimethoxysilane and vinyltriethoxysilane;
p-styryltrimethoxysilane, allyltrimethoxysilane, tris-(trimethoxysilylpropyl)isocyanurate, 3-isocyanatopropyltriethoxysilane, and 3-ureidopropyltriethoxysilane. The additive such as a silane compound is preferably blended in the amount of 0.01 to 5 parts by mass per 100 parts by mass of the resin.

Since the resin composition filled with the surface-treated aluminum nitride powder as a filler has good affinity between the particles of the surface-treated aluminum nitride powder and the resin, it is possible to improve the filling property of the filler into the epoxy resin and the operability. In particular, in a filler having low affinity with an epoxy resin by surface treatment for imparting hydrophobicity to an aluminum nitride powder, if voids are generated at the time of curing, water may easily enter. However, according to the resin composition filled with the surface-treated aluminum nitride powder as a filler, the generation of such voids is suppressed, so that hydrolysis of the filler is suppressed. Furthermore, it is also possible to effectively prevent deterioration of thermal conductivity, which is a concern due to the presence of the void.

The resin composition containing the surface-treated aluminum nitride powder as a filler and a cured body of the resin composition can be appropriately used for applications requiring thermal conductivity. The resin composition and the cured body thereof can be used, for example, as a material of a heat dissipation member for efficiently dissipating heat from a semiconductor component mounted on, for example, a home appliance, an automobile, or a laptop computer. Examples of the material of the heat dissipation member include a heat dissipation grease, a heat dissipation gel, a heat dissipation sheet, a phase change sheet, and an adhesive. In addition to the above, the resin composition and the cured body thereof can also be used as, for example, an insulating layer used for, for example, a metal base substrate, a printed substrate, or a flexible substrate, a semiconductor sealant, an underfill, a housing, or a heat dissipation fin.

### Examples

Hereinafter, the present invention will be further specifically described with reference to Examples and Comparative Examples, but the present invention is not limited to these.

Raw materials used and physical property measurement conditions will be described below.

### [Raw material aluminum nitride powder]

· A1: Aluminum nitride powder prepared by a reduction nitridation method. D50 = 1.20 µm, specific surface area 2.60 m²/g, carbon content 0.040 wt%.
· A2: Aluminum nitride powder prepared by a reduction nitridation method. D50 = 0.79 µm, specific surface area 2.80 m²/g, carbon content 0.040 wt%.
· A3: Aluminum nitride powder prepared by a reduction nitridation method. D50 = 4.95 µm, specific surface area 0.80 m²/g, carbon content 0.070 wt%.
· A4: Sintered particles of aluminum nitride powder. D50 = 35.0 µm, specific surface area 0.02 m²/g, carbon content 0.004 wt%.

A surface-treated aluminum nitride powder was prepared by surface-treating the raw material aluminum nitride powders A1 to A4 under the type of silane compound and surface treatment conditions described later.

### [Aluminum oxide powder]

· B1: Aluminum oxide powder. CB-A20S manufactured by Resonac Corporation (average particle diameter: 22.7 µm)

The aluminum oxide powder was used in combination with the surface-treated aluminum nitride powder. The aluminum oxide powder was used without surface treatment.

### [Silane compound]

· MPES: 3-Methacryloxypropyltriethoxysilane (manufactured by Shin-Etsu Chemical Co., Ltd., >98%)
· MPMS: 3-Methacryloxypropyltrimethoxysilane (manufactured by Shin-Etsu Chemical Co., Ltd., >98%)
· MOMS: 8-Methacryloxyoctyltrimethoxysilane (manufactured by Shin-Etsu Chemical Co., Ltd., >99%)
· VMS: vinyltrimethoxysilane (Tokyo Chemical Industry Co., Ltd. >98%)
· GPES: 3-Glycidoxypropyltriethoxysilane (manufactured by Shin-Etsu Chemical Co., Ltd., >98%)
· GPMS: 3-Glycidoxypropyltrimethoxysilane (manufactured by Shin-Etsu Chemical Co., Ltd., >98%)
· GOMS: 8-Glycidoxyoctyltrimethoxysilane (manufactured by Shin-Etsu Chemical Co., Ltd., >99%)

### [Epoxy resin]

· Epoxy resin jER828 (manufactured by Mitsubishi Chemical Corporation)

### [Curing agent]

· Amine curing agent jER CureW (manufactured by Mitsubishi Chemical Corporation)

### [Specific surface area]

The specific surface area of the raw material aluminum nitride powder and the surface-treated aluminum nitride powder was determined by BET method (a one-point method for nitrogen adsorption) using a specific surface area analyzer (manufactured by SHIMADZU CORPORATION, Flow Sorb 3-2305 type). In the measurement, 2 g of a raw material aluminum nitride powder or a surface-treated aluminum nitride powder was used, and an aluminum nitride powder previously subjected to a drying treatment at 100°C for 1 hour in a nitrogen gas flow was used for the measurement.

### [Particle size distribution]

Water was used as a solvent for the measurement of the particle size distribution of the raw material aluminum nitride powder. Ethanol was used as a solvent for the measurement of the particle size distribution of the surface-treated aluminum nitride powder.

For a liquid obtained by dispersing a raw material aluminum nitride powder or a surface-treated aluminum nitride powder in a solvent at a concentration of 0.2% by mass, and performing ultrasonic irradiation at approximately 200 W for 3 minutes, a particle size distribution was measured using a laser diffraction scattering particle size distribution analyzer. In the volume frequency distribution of the particle diameter, the volume frequency was accumulated from the smaller particle diameter, and the value of the particle diameter at which the accumulated value was 50% was set as D50, and the value of the particle diameter at which the cumulative value was 90% was set as D90. In the present invention, the value of D50 is taken as the average particle diameter.

### [Carbon content and silane compound (surface treatment agent) density]

The carbon content was measured using a carbon analyzer (EMIA-810 W manufactured by HORIBA, Ltd.). A part of the surface-treated aluminum nitride powder or raw material aluminum nitride powder as a sample was burned at 1350°C in an oxygen flow until carbon dioxide gas was not generated, and the carbon content per 1 m² of the surface of the powder was determined from the amount of generated carbon dioxide. Specifically, the carbon content was calculated by first determining the content of carbon in the sample by dividing the weight of carbon in the carbon dioxide gas by the weight of the sample, and then dividing the content by the specific surface area.

In addition, the silane compound density was calculated from the carbon content in the surface-treated aluminum nitride powder after cleaning and the information on the silane compound used. In the calculation of the silane compound density, as the carbon content in the surface-treated aluminum nitride powder, a value obtained by subtracting the content of carbon in the raw material aluminum nitride powder from the content of carbon in the surface-treated aluminum nitride powder and dividing the resultant by the specific surface area of the surface-treated aluminum nitride powder was used.

### [Unsaturated bond content]

An unsaturated bond was iodinated by adding iodine chloride having a known concentration to a solution in which the surface-treated aluminum nitride powder was dispersed in an organic solvent. Then, an excessive amount of potassium iodide was added to free unreacted iodine, and the solution colored with a starch reagent was titrated with an aqueous sodium thiosulfate solution until the coloration disappeared (Wijs method). From the titration result, the amount of unsaturated bonds was calculated and divided by the carbon content of the surface-treated aluminum nitride powder used to determine the unsaturated bond content per 1 g of carbon present on the surface of the surface-treated aluminum nitride powder. In the calculation of the unsaturated bond content, as the carbon content of the surface-treated aluminum nitride powder, a value obtained by subtracting the content of carbon in the raw material aluminum nitride powder from the content of carbon in the surface-treated aluminum nitride powder and dividing the resultant by the specific surface area of the surface-treated aluminum nitride powder was used.

### Examples 1 to 7

### (Surface-treated aluminum nitride powder)

To 100 parts by mass of the raw material aluminum nitride powder shown in Table 1, the silane compound shown in Table 1 was added in the addition amount (parts by mass) shown in Table 1 to a fluororesin flask, and the mixture was stirred with a fluororesin stirring blade for 30 minutes while keeping the temperature in the range of 25°C to 50°C. Thereafter, vacuum heating was performed at 80°C for 180 minutes to obtain surface-treated aluminum nitride powders A'1 to A'7. In all the steps, the heating temperature was controlled so as not to exceed 80°C.

For the obtained surface-treated aluminum nitride powder, the carbon content per 1 m² of the surface of the aluminum nitride powder, the unsaturated bond content per 1 g of carbon present on the surface of the aluminum nitride powder, and other physical properties were measured. The measurement results are shown in Table 1.

### Example 9

### (Resin composition)

0.47 g of the surface-treated aluminum nitride powder A'1 obtained by the above method, 1.33 g of the aluminum oxide powder CB-A20S, 0.12 g of the epoxy resin jER828, and 0.03 g of the curing agent CureW were weighed, and kneaded in a mortar for 15 minutes to obtain a resin composition. The filling ratio of the surface-treated aluminum nitride powder in the resin composition was 80%.

### Examples 8 and 10 to 17

A resin composition was obtained in the same manner as in Example 9 except that the type of the surface-treated aluminum nitride powder was changed as shown in Table 2, and the blending amounts of the surface-treated aluminum nitride powder and the aluminum oxide powder were changed so that the filling ratio was set to the numerical values shown in Table 2. The mass ratio between the blending amount of the surface-treated aluminum nitride powder and the blending amount of the aluminum oxide powder was the same as in Example 9.

### [Kneadability]

In the kneading operation, the kneadability was evaluated according to the following index, and the results are shown in Table 2.
· Kneadability index

Determination was made according to the following criteria.
AA: Liquid paste
BB: Solid paste that does not crack when bent
CC: Solid paste that cracks when bent
DD: Not formed into a paste

### [Pot life]

The pot life was defined as follows, and the results are shown in Table 2.

### · Pot life

Time until the paste in the kneadability index is cured and loses its moldability. Alternatively, the time until the paste changed to the state of CC by a change over time is disintegrated and becomes a state in which the paste cannot be repasted. That is, the time until the paste reaches the state of DD.

### (Cured body)

The obtained resin composition was hot-press molded at 150°C and 20 MPa for 1 hour, and further subjected to additional heating at 180°C for 1 hour to obtain a cured body having a diameter of 10 mm and a thickness of 1.2 mm.

### [Thermal conductivity of cured body]

The thermal diffusivity of the cured body produced by the above method was measured by a laser flash method (using LFA-502 manufactured by Kyoto Electronics Manufacturing Co., Ltd.), the measured value was multiplied by the specific heat and density of the resin composition to calculate the thermal conductivity, and the results are shown in Table 2.

### [Theoretical density ratio of cured body]

For the cured body prepared by the above method, the density was measured by the Archimedes method (using XS204V manufactured by Metler Toledo). Next, the theoretical density of the resin composition was determined from the densities of each of the filler and the resin, and the filling ratio, and the theoretical density ratio of the cured body was calculated. The results are shown in Table 2. The theoretical density ratio of the cured body is a value determined by (density of cured body/theoretical density of resin composition) × 100 (%), and it can be said that closer the value is to 100%, the smaller the number of voids.

### Comparative Examples 1 to 3 and 5 to 9

Surface-treated aluminum nitride powders A'8 to A'10 and resin compositions were obtained in the same manner as in Examples 1 and 9 except that the type and the addition amount of the silane compound were changed to those shown in Table 1, and evaluation was performed in the same manner as in Examples 1 and 9. The results are shown in Table 2.

In Comparative Examples 1 to 3, since the silane compound did not have an unsaturated bond, the unsaturated bond content was not measured.

### Comparative Examples 4 and 10

A surface-treated aluminum nitride powder A'11 and a resin composition were obtained in the same manner as in Examples 1 and 9 except that the surface treatment temperature (temperature during the vacuum heating) was 90°C, and evaluation was performed in the same manner as in Examples 1 and 9. The results are shown in Table 2.

**[Table 1]**

| | Raw material | | |
|---|---|---|---|
| | Aluminum nitride powder | Silane compound | |
| | Symbol | Abbreviation | Addition amount |
| Example 1 | A1 | MPES | 0.9 |
| Example 2 | A1 | MPMS | 0.7 |
| Example 3 | A1 | MOMS | 0.9 |
| Example 4 | A1 | VMS | 0.4 |
| Example 5 | A2 | MPES | 1.0 |
| Example 6 | A3 | MPES | 0.3 |
| Example 7 | A4 | MPES | 0.2 |
| Comparative Example 1 | A1 | GPES | 0.9 |
| Comparative Example 2 | A1 | GPMS | 0.7 |
| Comparative Example 3 | A1 | GOMS | 0.9 |
| Comparative Example 4 | A1 | MPES | 0.9 |

**Table 1 (continued)**

| | Surface-treated aluminum nitride powder | | | | | |
|---|---|---|---|---|---|---|
| | Carbon content × 10⁻³ g/m² | Unsaturate d bond content × 1021 pieces/g | Silane compound density pieces/nm² | D50 µm | Specific surface area m²/g | Symbol |
| Example 1 | 0.75 | 3.73 | 1.77 | 1.26 | 2.58 | A'1 |
| Example 2 | 0.76 | 4.00 | 1.79 | 1.25 | 2.60 | A' 2 |
| Example 3 | 1.54 | 4.56 | 4.50 | 1.28 | 2.32 | A' 3 |
| Example 4 | 0.44 | 3.87 | 1.83 | 1.26 | 2.46 | A' 4 |
| Example 5 | 0.78 | 3.54 | 1.79 | 0.81 | 2.65 | A' 5 |
| Example 6 | 0.71 | 4.12 | 3.89 | 5.03 | 0.73 | A' 6 |
| Example 7 | 0.44 | 4.86 | 3.15 | 39.02 | 0.11 | A' 7 |
| Comparative Example 1 | 0.92 | | 2.49 | 1.23 | 2.51 | A'8 |
| Comparative Example 2 | 0.98 | | 2.61 | 1.25 | 2.55 | A'9 |
| Comparative Example 3 | 1.45 | | 4.25 | 1.29 | 2.30 | A'10 |
| Comparative Example 4 | 0.73 | 2.14 | 1.71 | 1.28 | 2.61 | A'11 |

**[Table 2]**

| | Surface-treated aluminum nitride powder | Epoxy resin composition | | | Epoxy resin cured body | |
|---|---|---|---|---|---|---|
| | | Filling ratio | Kneadability | Pot life | Thermal conductivity | Density theoretical ratio |
| | | % | Index | h | W/mk | % |
| Example 8 | A'1 | 78 | AA | > 10 | 6.8 | 100.2 |
| Example 9 | A'1 | 80 | BB | > 10 | 7.4 | 100.0 |
| Example 10 | A'1 | 82 | BB | > 10 | 8.2 | 99.5 |
| Example 11 | A'1 | 84 | CC | > 10 | 8.7 | 98.9 |
| Example 12 | A'2 | 80 | AA | > 10 | 7.8 | 99.6 |
| Example 13 | A'3 | 80 | BB | > 10 | 7.0 | 98.6 |
| Example 14 | A'4 | 80 | BB | > 10 | 7.6 | 99.3 |
| Example 15 | A'5 | 80 | AA | > 10 | 7.1 | 100.1 |
| Example 16 | A'6 | 75 | BB | > 10 | 4.2 | 99.8 |
| Example 17 | A'7 | 60 | BB | > 10 | 3.9 | 98.1 |
| Comparative Example 5 | A'8 | 78 | BB | 1 | 6.4 | 97.0 |
| Comparative Example 6 | A'8 | 80 | BB | < 1 | 5.8 | 95.1 |
| Comparative Example 7 | A'8 | 82 | CC | < 1 | 5.9 | 93.8 |
| Comparative Example 8 | A'9 | 78 | BB | < 1 | 5.1 | 96.2 |
| Comparative Example 9 | A'10 | 78 | BB | 2 | 5.4 | 94.5 |
| Comparative Example 10 | A'11 | 78 | CC | 1 | 6.1 | 95.9 |

## Claims

1. A surface-treated aluminum nitride powder having a silane compound having a polymerizable unsaturated bond in a molecule present on a particle surface,
wherein a carbon content per 1 m² of a surface of the aluminum nitride powder is 0.4 × 10⁻³ g/m² or more and 1.6 × 10⁻³ g/m² or less, and an unsaturated bond content per 1 g of carbon present on the surface of the aluminum nitride powder, calculated from an iodine amount determined by Wijs method, is 2.5 × 10²¹ pieces/g or more and 5.5 × 10²¹ pieces/g or less.

2. The surface-treated aluminum nitride powder according to claim 1, wherein a 50% cumulative volume particle diameter D50 is 0.3 µm to 40 µm.

3. A filler formed of the surface-treated aluminum nitride powder according to claim 1 or 2.

4. A resin composition comprising: an epoxy resin; and the filler according to claim 3, wherein the filler is contained in an amount of 5% by mass or more in the resin composition.

5. A cured product of the resin composition according to claim 4.
